# EUROPEAN PATENT APPLICATION

(11) **EP 3 892 168 A1**
(43) Date of publication of application: **13.10.2021**
(21) Application number: 20217823.2
(22) Date of filing: 30.12.2020
(51) Int. Cl.: A47J 31/22, A47J 31/42, A47J 31/20, A47J 42/26, A47J 42/30

(54) **GRINDING DEVICE, COFFEE MAKER HAVING THE SAME AND METHOD FOR CONTROLLING GRINDING DEVICE**

(30) Priority: 09.04.2020 CN 202010273803
(71) Applicant: Tsann Kuen (Zhangzhou) Enterprise Co., Ltd., Fujian 363107 (CN)
(72) Inventor: CHENG, Yu-Chang, Zhangzhou, Fujian, 363107 (CN)
(74) Representative: Style, Kelda Camilla Karen

(57) **Abstract**

A grinding device includes a housing unit (1), a filtering unit (3), a grinding unit (2) and a sensing unit (4). The filtering unit (3) is mounted in the housing unit (1) and defines a grinding space (310) therein. The grinding unit (2) includes a blade element (21) rotatably mounted in the grinding space (310) for grinding objects disposed in the grinding space (310), and a driving element (22) operable to drive rotation of the blade element (21). The sensing unit (4) is for sensing presence of the objects in the grinding space (310), and is electrically connected to the driving element (22) to output a control signal thereto to stop rotation of the blade element (21) when sensing that the objects in the grinding space (310) are ground fully into powder so that none of the objects is sensed in the grinding space (310).

## Description

The disclosure relates to a grinding device, more particularly to a grinding device used in a coffee maker.

Generally, a time duration that a coffee grinder grinds coffee beans is preset manually. However, the coffee beans may not be fully ground into powders or may be ground too finely. In a case that the coffee beans are not fully ground, the taste of coffee brewed from overly coarse coffee ground is weak. On the other hand, in a case that the coffee beans are ground too finely, a motor of the coffee grinder may be overheated and damaged, and the taste of coffee brewed from such coffee grinder is bitter.

Therefore, an object of the disclosure is to provide grinding device capable of alleviating the drawbacks of the conventional coffee grinder.

According to an aspect of the disclosure, a grinding device includes a housing unit, a filtering unit, a grinding unit and a sensing unit. The housing unit includes a housing body and a cover. The housing body defines a receiving space therein and has an opening in spatial communication with the receiving space and ambient surroundings. The cover is mounted on a top of the housing body to cover the opening. The filtering unit is mounted in the receiving space and includes a strainer. The strainer defines a grinding space therein and is formed with a plurality of through holes in spatial communication with the receiving space and the grinding space. The grinding unit is mounted to the housing unit, and includes a blade element and a driving element. The blade element is rotatably mounted in the grinding space and is adapted for grinding objects disposed in the grinding space. The driving element is connected to the blade element and is operable to drive rotation of the blade element. The sensing unit is mounted to the housing unit, is adapted for sensing presence of the objects in the grinding space, and is electrically connected to the driving element to output a control signal to the driving element to stop rotation of the blade element when sensing that the objects in the grinding space are ground fully into powder so that none of the objects is sensed in the grinding space.

According to another aspect of the disclosure, a coffee maker includes a bottle unit and a grinding device. The bottle unit includes a bottle body and a lid. The bottle body defines an inner space. The lid is pivotally mounted to the bottle body. The grinding device is mounted in the inner space, and includes a housing unit, a filtering unit, a grinding unit and a sensing unit. The housing unit includes a housing body and a cover. The housing body defines a receiving space therein and has an opening in spatial communication with the receiving space and the inner space. The cover is mounted above the housing body to cover the opening. The filtering unit is mounted in the receiving space and includes a strainer. The strainer defines a grinding space therein and is formed with a plurality of through holes in spatial communication with the receiving space and the grinding space. The grinding unit is mounted to the housing unit, and includes a blade element and a driving element. The blade element is rotatably mounted in the grinding space and is adapted for grinding objects disposed in the grinding space. The driving element is connected to the blade element and is operable to drive rotation of the blade element. The sensing unit is mounted to the housing unit, is adapted for sensing presence of the objects in the grinding space, and is electrically connected to the driving element to output a control signal to the driving element to stop rotation of the blade element when sensing that the objects in the grinding space are ground fully into powder so that none of the objects are sensed in the grinding space.

According to still another aspect of the disclosure, a method for controlling operation of a grinding device is to be implemented by a grinding device. The grinding device includes a housing unit, a filtering unit, a grinding unit, and a sensing unit. The housing unit defines a receiving space therein. The filtering unit is mounted in the receiving space and includes a strainer defining a grinding space therein. The grinding unit includes a blade element disposed in the grinding space and a driving element connected to the blade element to drive the blade element to rotate. The sensing unit is mounted to the housing unit. The method includes steps of:
driving rotation of the blade element by the driving element;
sensing presence of the objects in the grinding space by the sensing unit; and
outputting a control signal, by the sensing unit, to the driving element to stop rotation of the blade element when the sensing unit detects that the objects in the grinding space are ground fully into powder so that none of the objects is sensed in the grinding space.

Other features and advantages of the disclosure will become apparent in the following detailed description of the embodiments with reference to the accompanying drawings, of which:
FIG. 1 is a partly exploded perspective view of a grinding device according to an embodiment of the present disclosure;
FIG. 2 is a partly exploded perspective view of a coffee maker according to another embodiment of the present disclosure;
FIG. 3 is a schematic sectional view of the coffee maker, illustrating that the coffee maker includes a bottle unit and a grinding device disposed in the bottle unit;
FIG. 4 is a schematic side view of a modified strainer of the grinding device; and
FIG. 5 is a flow chart illustrating a method for controlling operation of the grinding device of the coffee maker.

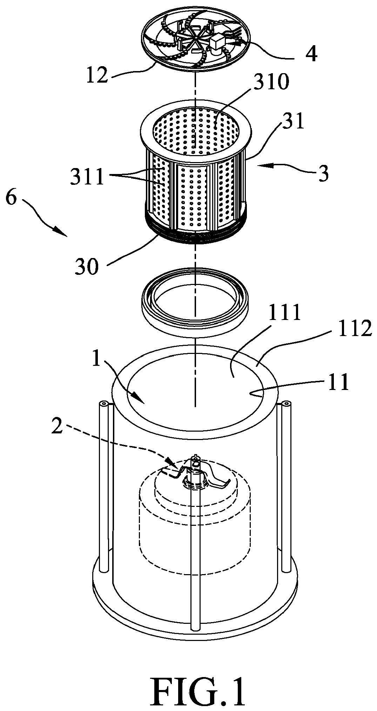

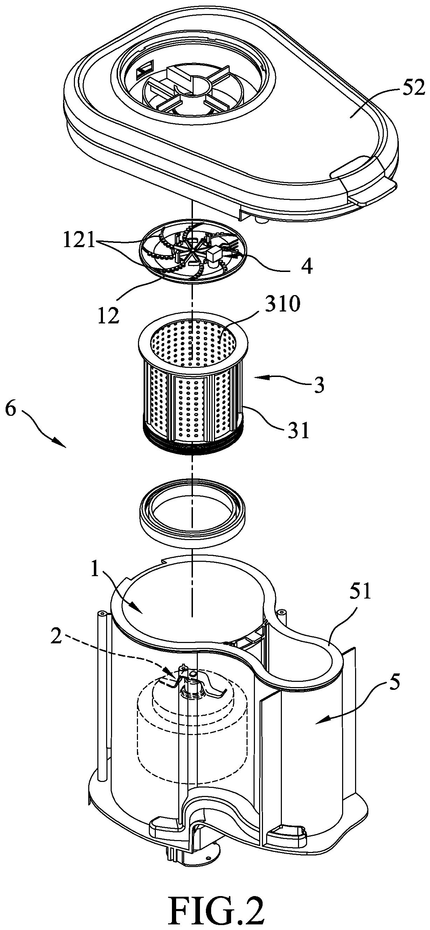

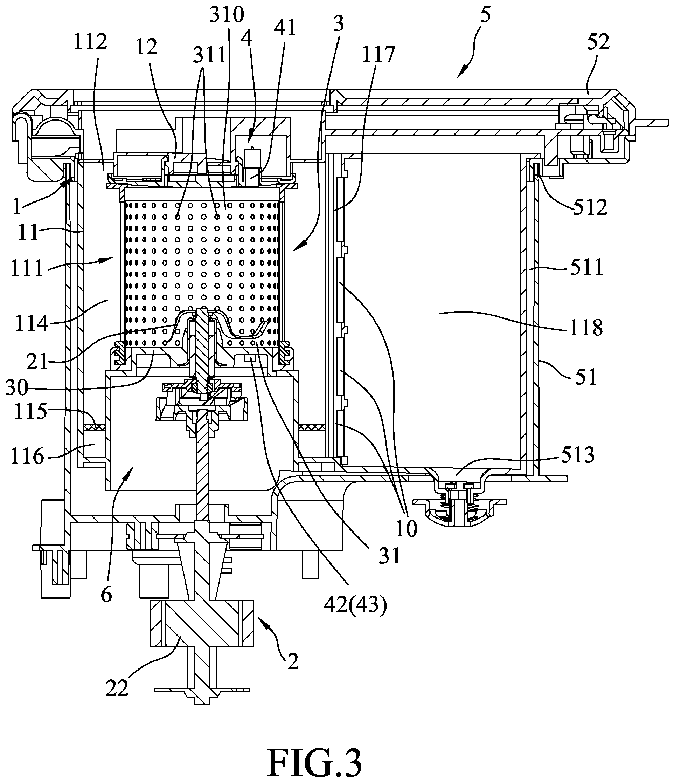

Referring to FIG. 1, an embodiment of a grinding device 6 according to the present disclosure is shown. The grinding device 6 can be mounted in a bottle 5 to form a coffee maker (see FIGS. 2 and 3) and includes a housing unit 1, a grinding unit 2, a filtering unit 3, and a sensing unit 4.

The housing unit 1 includes a housing body 11 and a cover 12. The housing body 11 defines a receiving space 111 therein and has an opening 112 in spatial communication with the receiving space 111 and ambient surroundings. The cover 12 is mounted on a top of the housing body 11 to cover the opening 112.

The filtering unit 3 is mounted in the receiving space 111 and includes a strainer 31. The strainer 31 is a cylindrical surrounding wall, defines a grinding space 310 therein, and is formed with a plurality of through holes 311 in spatial communication with the receiving space 111 and the grinding space 310. The housing body 11 cooperates with the strainer 31 to define a brewing space 114 therebetween.

The grinding unit 2 is mounted to the housing unit 1, and includes a blade element 21 and a driving element 22. The blade element 21 is rotatably mounted in the grinding space 310 and is adapted for grinding objects (i.e., coffee beans) disposed in the grinding space 310 into powder. The driving element 22 is connected to the blade element 21, is operable to drive rotation of the blade element 21, and is a motor, for example. The blade element 21 is configured to generate an air flow in the grinding space 310 when rotating to move the powder from the grinding space 310 into the brewing space 114 via the through holes 311 due to centrifugal force. The brewing space 114 is adapted for storing the powder and has a bottom end located farther from the cover 12 than a bottom end of the grinding space 310 in an up-down direction.

The sensing unit 4 is mounted to the housing unit 1, is adapted for sensing presence of the objects in the grinding space 310, and is electrically connected to the driving element 22 to output a control signal to the driving element 22 to stop rotation of the blade element 21 when sensing that the objects in the grinding space 310 are ground fully into powder and are moved into the brewing space 114 due to centrifugal force so that none of the objects is sensed in the grinding space 310.

The sensing unit 4 includes a light emitting element 41, a reflecting element 42, and a receiving element 43. The light emitting element 41 is for outputting a light signal. The reflecting element 42 is mounted to the housing body 11 for reflecting the light signal outputted by the light emitting element 41. The receiving element 43 is for receiving the light signal reflected by the reflecting element 42 to output the control signal to the driving element 22. In this embodiment, the light emitting element 41 is mounted on the cover 12 and emits light through the grinding space 310, and the receiving element 43 is mounted to the strainer 31 and disposed under the blade element 21.

The filtering unit 3 further includes a bottom plate 30 disposed under and connected to the strainer 31 to define the bottom end of the grinding space 310. The bottom plate 30 is made of a light transmissive material to permit the receiving element 43 to receive the light signal reflected by the reflecting element 42.

Note that the configuration of the sensing unit 4 is not limited to the example described herein, for example, the positions where the light emitting element 41, the reflecting element 42 and the receiving element 43 are mounted are interchangeable. In other embodiments of the present disclosure, the reflecting element 42 and the receiving element 43 may be omitted and the light emitting element 41 is capable of receiving the light signal emitted thereby and reflected by the blade element 21 in the strainer 31 to output the control signal. Further, in other embodiments, the sensing unit 4 may be a weight sensor such as a load cell mounted under the strainer 31 for sensing presence of the objects in the grinding space 310. A photo-switch, a capacitor switch, a resistance switch and any other sensors and switches capable of sensing presence of objects disposed in the grinding space 310 may be utilized as the sensing unit 4, and the implementation of the sensing unit 4 is not limited to the examples described herein.

The housing unit 1 further includes a lower filtering wall 115 that is disposed in the brewing space 114 and that is located farther from the cover 12 than the bottom plate 30 in the up-down direction such that the powder is accumulated in the brewing space 114.

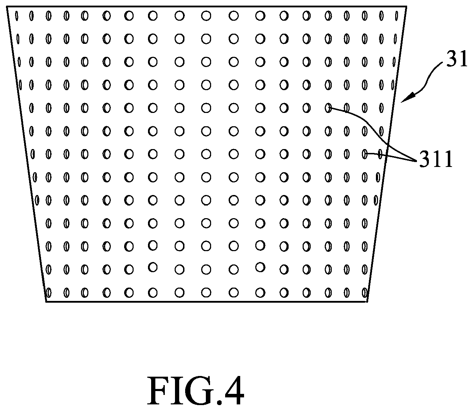

Referring to FIG. 4, a modification of the strainer 31 of the filtering unit 3 is shown. The strainer 31 is a frustoconical surrounding wall converging downwardly, and the configuration of the strainer 31 is not limited to the examples described herein.

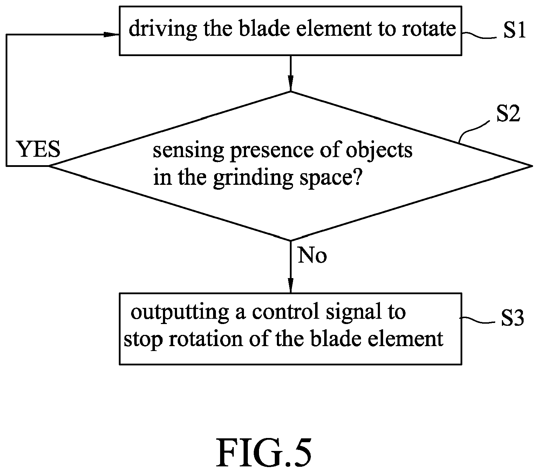

Further referring to FIG. 5, a method for controlling operation of the grinding device 6 is to be implemented by the grinding device 6. In this embodiment, the grinding unit 2 is provided for grinding coffee beans. Before performing the method for controlling operation of the grinding device 6, the coffee beans are first disposed in the grinding space 310 through the opening 112, and then the cover 12 is disposed on the top of the housing body 11 to cover the opening 112.

In step S1, the blade element 21 of the grinding unit 2 is driven by the driving element 22 to rotate so as to grind the coffee beans disposed in the grinding space 310. The blade element 21 generates an air flow in the grinding space 310 when rotating to move the powder from the grinding space 310 into the brewing space 114 via the through holes 311 due to centrifugal force. By virtue of the structure of the lower filtering wall 115 that is disposed in the brewing space 114 and that is located lower than the bottom plate 30 of the filtering unit 3 in the up-down direction, the powder would not be left in the grinding space 30. Thus, the powder is wholly moved into the brewing space 114 and is accumulated on the lower filtering wall 115.

Step S2 is to sense presence of the objects in the grinding space 310 and is performed while step S1 is performing. In step S2, the sensing unit 4 repeatedly outputs a light signal by the light emitting element 41 and determines that none of the objects is in the grinding space 310 when the light signal is received by the receiving element 43. When the determination made in step S2 is positive (i.e., there are still some coffee beans in the grinding space 310), the flow of the method goes back to step S1; otherwise, the coffee beans in the grinding space 310 are ground fully into powder and are moved into the brewing space 114 so that none of the objects is sensed in the grinding space 310, and the flow of the method goes to step S3.

In step S3, the receiving element 43 of the sensing unit 4 outputs a control signal to the driving element 22 to stop rotation of the blade element 21. In this way, the coffee beans disposed in the grinding space 310 can be ground fully into powder without being ground too fine or overly coarse.

Referring back to FIGS. 2 and 3, a coffee maker of another embodiment of the present disclosure including the above-mentioned grinding device 6 and the bottle unit 5 is to be described. The bottle unit 5 includes a bottle body 51 and a lid 52. The bottle body 51 defines an inner space 511 and is formed with an inlet 512 and an outlet 513 that are in spatial communication with the inner space 511 and ambient surroundings. The lid 52 is pivotally mounted to the bottle body 51 to cover the inlet 512. The grinding device 6 is mounted in the inner space 511 and the opening 112 of the grinding device 6 is in spatial communication with the receiving space 111 and the inner space 511.

In this embodiment, the cover 12 is mounted in the lid 52 and is formed with a plurality of through bores 121 adapted for permitting hot water to be sprinkled into the receiving space 111 and then flowing into the brewing space 114 to mix with the powder so as to brew coffee.

The lower filtering wall 115 of the housing unit 1 is located at a lower end portion in the receiving space 111, cooperates with the housing body 11 to define a collecting channel 116 in the receiving space 111 and under the lower filtering wall 115, and is adapted for filtering the coffee so that the coffee flows into the collecting channel 116.

The collecting channel 116 is in spatial communication with the outlet 513 so as to guide the coffee filtered by the lower filtering wall 115 to discharge out of the outlet 513. Specifically, in this embodiment, the housing unit 1 further includes a filtering side plate 117. The filtering side plate 117 is disposed in the receiving space 111, cooperates with the housing body 11 to define a collecting compartment 118, and is formed with a plurality of perforations 10. The collecting compartment 118 is spaced apart from the grinding device 6 and is in spatial communication with the outlet 513. The perforations 10 are in spatial communication with the collecting compartment 118 and the collecting channel 116. The filtering side plate 117 is adapted for filtering the coffee that flows from the receiving space 111 into the collecting compartment 118 via the perforations 10 to discharge the coffee out of the outlet 513.

To sum up, by virtue of the sensing unit 4 that senses presence of the objects in the grinding space 310 and the structures of grinding unit 2 and the filtering unit 3 of the present disclosure, the objects disposed in the grinding space 310 can be fully ground into powder without being ground too fine or overly coarse. In this way, the driving element 22 of the grinding device 6 would not be overheated, and the taste of the beverage brewed from the powder ground by the grinding device 6 is relatively good.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

While the disclosure has been described in connection with what is considered the exemplary embodiment, it is understood that this disclosure is not limited to the disclosed embodiment but is intended to cover various arrangements included within the spirit and scope of the broadest interpretation so as to encompass all such modifications and equivalent arrangements.

## Claims

1. A grinding device comprising:
a housing unit (1) including a housing body (11) that defines a receiving space (111) therein and that has an opening (112) in spatial communication with said receiving space (111) and ambient surroundings, and a cover (12) that is mounted on a top of said housing body (11) to cover said opening (112), said grinding device **characterized by**;
a filtering unit (3) mounted in said receiving space (111) and including a strainer (31) that defines a grinding space (310) therein and that is formed with a plurality of through holes (311) in spatial communication with said receiving space (111) and said grinding space (310);
a grinding unit (2) mounted to said housing unit (1) , and including a blade element (21) that is rotatably mounted in said grinding space (310) and that is adapted for grinding objects disposed in said grinding space (310), and a driving element (22) that is connected to said blade element (21) and that is operable to drive rotation of said blade element (21); and
a sensing unit (4) mounted to said housing unit (1), adapted for sensing presence of the objects in said grinding space (310), and electrically connected to said driving element (22) to output a control signal to said driving element (22) to stop rotation of said blade element (21) when sensing that the objects in said grinding space (310) are ground fully into powder so that none of the objects is sensed in said grinding space (310) .

2. The grinding device as claimed in Claim 1, **characterized in that** said sensing unit (4) includes a light emitting element (41) for outputting a light signal, a reflecting element (42) for reflecting the light signal outputted by said light emitting element (41), and a receiving element (43) for receiving the light signal reflected by said reflecting element (42) to output the control signal to said driving element (22) .

3. The grinding device as claimed in Claim 2, further **characterized in that** said light emitting element (41) of said sensing unit (4) is mounted on said cover (12) and emits light through said grinding space (310), said receiving element (43) being mounted to said strainer (31) and disposed under said blade element (21).

4. The grinding device as claimed in any one of Claims 1 to 3, **characterized in that** said housing body (11) cooperates with said strainer (31) to define a brewing space (114) therebetween, said brewing space (114) being adapted for storing the powder, said blade element (21) being configured to generate an air flow in said grinding space (310) when rotating to move the powder from said grinding space (310) into said brewing space (114) via said through holes (311) due to centrifugal force.

5. The grinding device as claimed in Claim 4, further **characterized in that** said grinding space (310) has a bottom end and said brewing space (114) has a bottom end located farther from said cover (12) than said bottom end of said grinding space (310) in an up-down direction.

6. The grinding device as claimed in Claim 5, further **characterized in that** said filtering unit (3) further includes a bottom plate (30) disposed under and connected to said strainer (31) to define said bottom end of said grinding space (310), said housing unit (1) further including a lower filtering wall (115) that is disposed in said brewing space (114) and that is located farther from said cover (12) than said bottom plate (30) in the up-down direction such that the powder is accumulated in said brewing space (114).

7. The grinding device as claimed in any one of Claims 1 to 6, **characterized in that** said strainer (31) of said filtering unit (3) is a frustoconical surrounding wall converging downwardly.

8. The grinding device as claimed in any one of Claims 1 to 6, **characterized in that** said strainer (31) of said filtering unit (3) is a cylindrical surrounding wall.

9. A coffee maker comprising:
a bottle unit (5) including a bottle body (51) that defines an inner space (511), and a lid (52) that is pivotally mounted to said bottle body (51); and
a grinding device (6) mounted in said inner space (511), and including
a housing unit (1) including a housing body (11) that defines a receiving space (111) therein and that has an opening (112) in spatial communication with said receiving space (111) and said inner space (511), and a cover (12) that is mounted above said housing body (11) to cover said opening (112),
a filtering unit (3), a grinding unit (2), and a sensing unit (4) of any one of Claims 1 to 8.

10. The coffee maker as claimed in claim 9, further **characterized in that** said cover (12) is mounted in said lid (52) and is formed with a plurality of through bores (121) adapted for permitting hot water to be sprinkled into said receiving space (111) to mix with the powder so as to brew coffee.

11. The coffee maker as claimed in Claim 10, further **characterized in that** said bottle body (51) of said bottle unit (5) is formed with an outlet (513) adapted to be in spatial communication with said inner space (511) and ambient surroundings, said housing unit (1) further including a lower filtering wall (115) located at a lower end portion in said receiving space (111), cooperating with said housing body (11) to define a collecting channel (116) in said receiving space (111) and under said lower filtering wall (115), and adapted for filtering the coffee so that the coffee flows into said collecting channel (116), said collecting channel (116) being in spatial communication with said outlet (513) so as to guide the coffee filtered by said lower filtering wall (115) to discharge out of said outlet (513) .

12. The coffee maker as claimed in Claim 10, further **characterized in that** said bottle body (51) of said bottle unit (5) is formed with an outlet (513) adapted to be in spatial communication with said inner space (511) and ambient surroundings, said housing unit (1) further including a filtering side plate (117) disposed in said receiving space (111), and cooperating with said housing body (11) to define a collecting compartment (118) that is spaced apart from said grinding device (6) and that is in spatial communication with said outlet (513), said filtering side plate (117) being adapted for filtering the coffee that flows from said receiving space (111) into said collecting compartment (118) to discharge out of said outlet (513).

13. A method for controlling operation of a grinding device (6) to be implemented by a grinding device (6) including a housing unit (1) that defines a receiving space (111) therein, a filtering unit (3) that is mounted in the receiving space (111) and that includes a strainer (31) defining a grinding space (310) therein, a grinding unit (2) that includes a blade element (21) disposed in the grinding space (310) and a driving element (22) connected to the blade element (2) to drive the blade element (21) to rotate, and a sensing unit (4) that is mounted to the housing unit (1), the method **characterized by** steps of:
driving rotation of the blade element (21) by the driving element (22);
sensing presence of the objects in the grinding space (310) by the sensing unit (4); and
outputting a control signal, by the sensing unit (4), to the driving element (22) to stop rotation of the blade element (21) when the sensing unit (4) detects that the objects in the grinding space (310) are ground fully into powder so that none of the objects is sensed in the grinding space (310).

14. The method as claimed in claim 13, **characterized in that** the step of sensing presence of the objects in the grinding space (310) includes repeatedly outputting a light signal and determining that none of the objects is in the grinding space (310) when the light signal is received by the sensing unit (4).
